# EUROPÄISCHE PATENTSCHRIFT

(11) **EP 3 157 187 B1**
(45) Veröffentlichungstag und Bekanntmachung des Hinweises auf die Patenterteilung: **12.09.2018**
(21) Anmeldenummer: 16194136.4
(22) Anmeldetag: 17.10.2016
(51) Int. Cl.: H04L 1/08, H04L 1/00, H04L 1/18

(54) **ZEITGESTEUERTES VERFAHREN ZUM PERIODISCHEN FEHLERTOLERANTEN TRANSPORT VON ECHTZEITDATEN IN EINEM VERTEILTEN COMPUTERSYSTEM**
TIMED METHOD FOR PERIODIC ERROR TOLERANT TRANSPORT OF REAL-TIME DATA IN A DISTRIBUTED COMPUTER SYSTEM
PROCÉDÉ TEMPORISÉ DE TRANSPORT PÉRIODIQUE EN TEMPS RÉEL ET TOLÉRANT AUX PANNES DE DONNÉES DANS UN SYSTÈME INFORMATIQUE RÉPARTI

(30) Priorität: 16.10.2015 AT 508842015
(43) Veröffentlichungstag der Anmeldung: 19.04.2017
(73) Patentinhaber: TTTech Computertechnik AG, 1040 Wien (AT)
(72) Erfinder: POLEDNA, Stefan, 3400 Klosterneuburg (AT)
(74) Vertreter: Patentanwaltskanzlei Matschnig & Forsthuber OG

(56) Entgegenhaltungen:
- WO-A1-2013/155547
- WO-A2-03/028336

## Beschreibung

Die Erfindung betrifft ein, insbesondere fehlertolerantes, Verfahren, insbesondere zeitgesteuertes fehlertolerantes Verfahren, zum periodischen Transport von Echtzeitdaten in einem Computersystem, insbesondere in einem verteilten Computersystem, welches Computersystem Knotenrechner, insbesondere eine Vielzahl von Knotenrechnern, und Verteilereinheiten, insbesondere eine Vielzahl von Verteilereinheiten, umfasst, wobei die Knotenrechner und die Verteilereinheiten Zugriff auf eine globale Zeit haben, und wobei Echtzeitdaten mittels zeitgesteuerter Echtzeitnachrichten transportiert werden.

Weiters betrifft die Erfindung ein Computersystem, insbesondere verteiltes Computersystem, welches Computersystem Knotenrechner, Knotenrechner, insbesondere eine Vielzahl von Knotenrechnern, und Verteilereinheiten, insbesondere eine Vielzahl von Verteilereinheiten, umfasst, wobei die Knotenrechner und die Verteilereinheiten Zugriff auf eine globale Zeit haben, und wobei Echtzeitdaten mittels zeitgesteuerter Echtzeitnachrichten transportiert werden.

Ein solches bzw. ähnliches Verfahren bzw. Computersystem ist beispielsweise in der WO 03/028336 A2 oder der WO 2013/155547 A1 beschrieben.

In vielen Echtzeitsystemen, vor allem im Bereich der Regelungstechnik werden periodische Prozesse realisiert [6]. In einem verteilten Echtzeitcomputersystem bezeichnet man einen sich zeitlich wiederholenden periodischen Prozessabschnitt als einen *Frame.*

In einem verteilten Echtzeitcomputersystem beginnt ein Frame mit der synchronisierten Beobachtung eines technischen Prozesses durch beispielsweise räumlich verteilte Sensoren, um den Zustand dieses technischen Prozesses zu einem vorgegebenen Zeitpunkt zu erfassen.

Jedem Sensor ist vorzugsweise ein Knotenrechner zugeordnet, wobei Sensor und Knotenrechner als getrennte Baueinheiten ausgebildet und miteinander verbunden sein können, oder Sensor und Knotenrechner sind als eine Baueinheit ausgebildet ("intelligenter Sensor").

Die Beobachtung eines technischen Prozesses kann nur dann synchron stattfinden, wenn alle Knotenrechner, die in der Regel dezentral angeordnet sind, Zugriff auf eine globale Zeit haben. Beispielsweise kann die im zeitgesteuerten TT-Ethernet Protokoll [4] enthaltene interne Uhrensynchronisation zum Aufbau einer globalen Zeit in allen Komponenten eines verteilten Echtzeitsystems, insbesondere eines verteilten Echtzeitcomputersystems, genutzt werden. Da es möglich ist, die interne Ethernet Zeit mit einem externen Zeitstandard, z.B. GPS, zu synchronisieren, kann die Ethernet Zeit die Synchronisation der Sensoren auch übernehmen, wenn eine externe Synchronisation erforderlich ist.

Die bei den Sensoren angeordneten bzw. den Sensoren zugeordneten Knotenrechner oder die intelligenten Sensoren führen eine erste Vorverarbeitung der Sensordaten durch und senden diese vorverarbeiteten Sensordaten, vorzugsweise in einem *periodisch wiederkehren Zeitschlitz,* über ein Echtzeitkommunikationssystem, vorzugsweise sofort, an einen zentralen Knotenrechner, der z.B. die Ausführung eines entsprechenden Regelalgorithmus vornimmt. In der Folge sendet der zentrale Knotenrechner aus den Sensordaten errechnete Sollwerte an die typischer Weise räumlich verteilten Knotenrechner, die die Kontrolle über Aktuatoren ausüben, um die Sollwerte zu einem synchronisierten Zeitpunkt an den Prozess übergeben zu können. Eine kurze Dauer eines Frames hilft, die *Totzeit* des gesamten Regelungssystems klein zu halten und damit die Qualität der Regelung zu verbessern.

Es ist eine Aufgabe der vorliegenden Erfindung, eine Lösung dafür anzugeben, wie in einem Echtzeitsystem, insbesondere einem verteilten zeitgesteuerten Echtzeitsystem bzw. in einem Echtzeitcomputersystem, insbesondere einem verteilten zeitgesteuerten Echtzeitcomputersystem eine schnelle fehlertolerante Übertragung von Echtzeitdaten realisiert werden kann.

Diese Aufgabe wird mit einem eingangs erwähnten Verfahren und einem eingangs erwähnten Computersystem dadurch gelöst, dass erfindungsgemäß *ausgewählte Verteilereinheiten eine zentrale Struktur* von Verteilereinheiten bilden, und wobei während einer *periodischen Kommunikationsrunde (PKR)* im fehlerfreien Fall mindestens zwei Kopien jeder zu sendenden Echtzeitnachricht über mindestens *zwei unabhängige Routen durch die zentrale Struktur* durch Ausführung eines satisfizierenden oder optimalen Zeitplans von einer *Startverteilereinheit* in der zentralen Struktur zu einer *Zielverteilereinheit* in der zentralen Struktur transportiert werden, wobei ein Zeitplan *optimal* ist, wenn es keinen Zeitplan gibt, der den Nachrichtenaustausch unter gegebenen Randbedingungen in einer kürzerer Zeit realisiert als dieser Zeitplan, und wobei ein Zeitplan *satisfizierend* ist, wenn der Nachrichtenaustausch unter den gegebenen Randbedingungen zufriedenstellend erfolgt, ohne dass dieser Zeitplan aber optimal ist, und wobei der Zeitplan einen *Fehlererkennungszeitpunkt* enthält, zu welchem eine Zielverteilereinheit feststellen kann, ob in dem Nachrichtentransport ein Fehler aufgetreten ist, sodass im Fehlerfall unmittelbar nach dem in dem Zeitplan, vorzugsweise in dem optimalen Zeitplan, enthaltenen *Fehlererkennungszeitpunkt* mit einer Fehlerbehandlung begonnen werden kann.

Bei dem Computersystem handelt es sich vorzugsweise um ein verteiltes Echtzeitcomputersystem.

Im Rahmen dieses Textes werden Begriffe verwendet, die im Folgenden beschrieben werden sollen:
*Fehlerfall:* im der folgenden Tabelle wird zwischen Fehlerfall und Anomalie bzw. dem korrekten Fall unterscheiden. CRC bedeutet dabei "cyclic redundancy check", der vorzugsweise durchgeführt wird.

| **Szenarium** | **Charakterisierung** | **Bewertung** | **Aktion** |
|---|---|---|---|
| Zwei Nachrichten Treffen ein | CRC Check beider Nachrichten ok., Inhalt gleich | korrekt | Weiterleitung einer Nachricht |
| Zwei Nachrichten Treffen ein | Check beider Nachrichten ok., Inhalt nicht gleich | Fehlerfall | Fehlermeldung, |
| Zwei Nachrichten Treffen ein | CRC Check einer Nachricht ist ok CRC Check der anderen, Nachricht ist nicht ok | Anomalie | Weiterleitung der Nachricht mit korrektem CRC, Anomaliemeldung |
| Zwei Nachrichten Treffen ein | CRC Check keiner der beiden Nachrichten ist ok | Fehlerfall | Fehlermeldung, |
| Eine Nachricht trifft ein | CRC Check ok | Anomalie | Weiterleitung der Nachricht Anomaliemeldung |
| Eine Nachricht trifft ein | CRC Check nicht ok | Fehlerfall | Fehlermeldung, |
| Keine Nachricht trifft vor der Deadline ein | | Fehlerfall | Fehlermeldung |

*Fehlerbehandlung*: die Fehlerbehandlung ist abhängig von der jeweiligen Anwendung. Würde beispielsweise bei einem Roboter ein Fehlerfall erkannt werden, so besteht die Fehlerbehandlung vorzugsweise darin, dass vorerst der Roboter gestoppt wird, sodass z.B. durch unkontrollierte Bewegungen kein Schaden entstehen kann.

*Echtzeitnachricht*: Eine Nachricht, die Echtzeitdaten enthält und die innerhalb eines vorgegebenen Echtzeitinterintervalls bei einem Empfänger eintreffen soll.

*Zentrale Struktur von Verteilereinheiten*: Eine Kommunikationstopologie, die dadurch gekennzeichnet ist, dass Verteilereinheiten die Knoten eines Graphen und die Pfade die Verbindung zwischen je zwei Knoten zum Transport von *Echtzeitdaten* bzw. von *Echtzeitnachrichten* darstellen, wobei jede Verteilereinheit der zentralen Struktur über mindestens zwei unabhängige Routen (siehe weiter unten) erreicht werden kann.

*Ausgewählte Verteilereinheit*: Verteilereinheit, die in der zentralen Struktur enthalten ist.

*Startverteilereinheit*: Ausgewählte Verteilereinheit, die von einem oder mehreren der ihr zugeordneten Knotenrechner Echtzeitdaten zum Transport durch die zentrale Struktur von Verteilereinheiten empfängt.

*Zielverteilereinheit*: Ausgewählte Verteilereinheit, die an eine oder an mehrere der ihr zugeordneten Knotenrechner Echtzeitdaten, die über die zentrale Struktur von Verteilereinheiten empfangen wurden, weiterleitet.

*Unabhängige Routen*: Zwei Routen von einer Startverteilereinheit zu einer Zielverteilereinheit durch eine zentrale Struktur von Verteilereinheiten sind unabhängig, wenn sich in den Routen von der Startverteilereinheit zur Zielverteilereinheit kein gemeinsamer Pfad befindet.

*Periodische Kommunikationsrunde (PKR)*: Ein durch einen Zeitplan bestimmtes periodisches Intervall, während dem jede Startverteilereinheit die vor dem Beginn des periodischen Intervalls von den zugeordneten Knotenrechner empfangenen Echtzeitdaten an die Zielverteilereinheiten transportiert.

*Optimaler Zeitplan*: Ein vorliegender Zeitplan, der den zeitgesteuerten Transport von Echtzeitdaten über eine zentrale Struktur von Verteilereinheiten innerhalb einer PKR festlegt, ist optimal, wenn es keinen Zeitplan gibt, der den Nachrichtenaustausch unter den gegebenen Randbedingungen in einer kürzerer Zeit realisiert als der vorliegende Zeitplan.

*Satisfizierender Zeitplan*: Ein Zeitplan, der den zeitgesteuerten Transport von Echtzeitdaten über eine zentrale Struktur von Verteilereinheiten innerhalb einer PKR festlegt, ist *satisfizierend,* wenn der Nachrichtenaustausch unter den gegebenen Randbedingungen zufriedenstellen erfolgt, ohne dass dieser Zeitplan aber optimal ist. Vorzugsweise wird im Rahmen der vorliegenden Erfindung unter einem satisfizierenden Zeitplan ein Zeitplan verstanden, der den Nachrichtenaustausch - unter gegebenen Randbedingungen - in einer Zeitdauer realisiert, welche die Zeitdauer, die ein optimaler Zeitplan unter diesen Randbedingungen benötigen würde, um maximal 50% übersteigt.

*Fehlererkennungszeitpunkt*: Frühester Zeitpunkt, zu dem ein Fehlerfall (siehe oben) im Nachrichtentransport erkannt werden kann.

Mit der Erfindung kann, insbesondere bei Verwendung eines optimalen Zeitplans, sehr rasch erkannt werden, dass ein Fehler aufgetreten ist und es kann entsprechend rasch die Fehlerbehandlung beginnen.

Die vorliegende Erfindung legt ein Verfahren und ein Computersystem offen, wie die Dauer eines periodischen fehlertoleranten Datentransports von Echtzeitdaten minimal gehalten werden kann, um die Totzeit des Regelungssystem zu reduzieren.

Ausgehend von einer gegebenen Topologie einer zentralen Struktur von Verteilereinheiten wird ein Zeitplan entwickelt, der in kürzester Zeit die periodische fehlertolerante Übertragung von Echtzeitdaten und eine kurze Fehlererkennungslatenz realisiert.

Vorteilhafte Ausgestaltungen des erfindungsgemäßen Verfahrens bzw. Computersystems, welche jeweils für sich allein oder in beliebiger Kombination realisiert sein können, sind im Folgenden aufgezählt:
- nach Ende einer *periodischen Kommunikationsrunde* senden jene Verteilereinheiten, die an dieser *periodischen Kommunikationsrunde* teilgenommen haben, eine Kopie der während dieser *periodischen Kommunikationsrunde* empfangenen, vorzugsweise korrekten (siehe oben) Echtzeit-Nachrichten an die der jeweiligen Verteilereinheit zugehörigen Knotenrechner;
- nach Ende einer *periodischen Kommunikationsrunde* melden die Verteilereinheiten Fehler, die während der *periodischen Kommunikationsrunde* erkannt worden sind, an einen Monitorknotenrechner;
- der Transport von Nachrichten, insbesondere von Echtzeitnachrichten, wird in der zentralen Struktur von Verteilereinheiten mit dem TTEthernet Protokoll durchgeführt;
- eine Startverteilereinheit überträgt die Echtzeitdaten in einer PKR an jede Verteilereinheit in der zentralen Struktur. Somit bilden alle anderen Verteilereinheiten in der zentralen Struktur für diese Startverteilereinheit die Zielverteilereinheiten;
- alle Verteilereinheiten in der zentralen Struktur fungieren als Startverteilereinheit, welche in einer PKR Echtzeitnachrichten an Zielverteilereinheiten, vorzugsweise an alle übrigen ausgewählten Verteilereinheiten in der zentralen Struktur, übertragen;
- ein Knotenrechner ist mit zwei oder mehr *ausgewählten Verteilereinheiten* der zentralen Struktur von Verteilereinheiten verbunden.

Die Inbetriebnahme und Wartung eines verteilten Echtzeitsystems wird wesentlich erleichtert wenn die Ein-und Ausgabedaten jedes Knotenrechners von einem unabhängigen Monitor rückwirkungsfrei beobachtet werden können. Es ist deshalb vorteilhaft, wenn das Echtzeitkommunikationssystem die zwischen den Knotenrechnern ausgetauschten Daten auch einem Monitor zur Verfügung stellt.

Die vorliegende Erfindung wird an Hand der folgenden Zeichnung an einem Beispiel näher erklärt. In dieser zeigt
Fig. 1 den zeitlichen Ablauf innerhalb eines Frames,
Fig. 2 die Topologie eines verteilten Echtzeitsystems, insbesondere Echtzeitcomputersystems, und
Fig. 3 die Topologie des verteilten Echtzeitsystems, insbesondere Echtzeitcomputersystems, mit einer redundanten Ankopplung eines Knotenrechners.

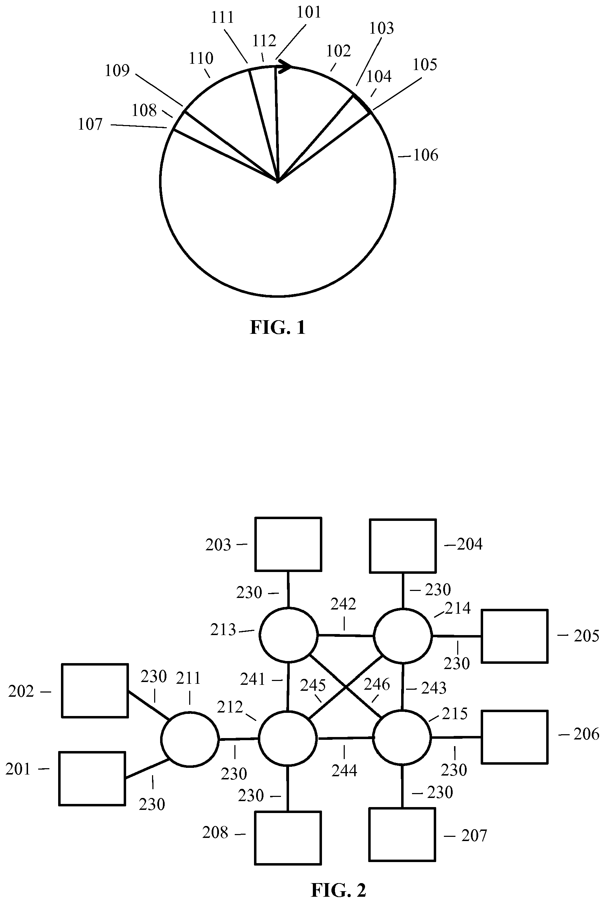

**Figur 1** zeigt den zeitlichen Ablauf innerhalb eines Frames. Zu einem synchronisierten Zeitpunkt **101** beginnt ein Frame. Zu diesem Zeitpunkt **101** erfassen Sensoren, welche Knotenrechnern zugeordnet sind, die Daten eines technischen Prozesses. In einem Zeitintervall **102** werden die erfassten Daten vorverarbeitet, und ein Knotenrechner sendet die Daten an die ihm zugeordnete *Startverteilereinheit.*

In jeder PKR sendet dabei vorzugsweise jeder Knotenrechner Daten an seine Startverteilereinheit.

Zum synchronisierten Zeitpunkt **103** beginnt eine *periodische Kommunikationsrunde (PKR)*, die nach einer Dauer **104** zum Zeitpunkt **105** mit dem Endzeitpunkt **105** der Übergabe der Daten an die *Zielverteilereinheit* endet. Im Zeitintervall **106** zwischen den Zeitpunkten **105** und **107** wird in einem zentralen Knotenrechner ein Regelungsalgorithmus ausgeführt und es werden Sollwerte ermittelt und an die entsprechenden Startverteilereinheiten übergeben.

Im Zeitintervall **108** zwischen den Zeitpunkten **107** und **109**, d.h. im Intervall **108**, findet eine weitere *periodischen Kommunikationsrunde (PKR)* zur Übertragung der Sollwerte an Knotenrechner, die Aktuatoren ansteuern, statt. Im Zeitintervall **110** werden die erhaltenen Sollwerte von den bei den Aktuatoren angeordneten Knotenrechnern in konkrete Parameter für die Aktuatoren umgesetzt und zum Zeitpunkt **111** findet die Ansteuerung der Aktuatoren statt.

In **Figur 2** ist die Topologie eines verteilten Computersystems dargestellt. In **Figur 2** sind acht Knotenrechner **201**, **202**, **203**, **204**, **205**, **206**, **207**, **208** über Verteilereinheiten **211**, **212**, **213**, **214**, **215** verbunden. Die Verteilereinheiten **212**, **213**, **214** und **215** sind *ausgewählte Verteilereinheiten,* die eine *zentrale Struktur von Verteilereinheiten* bilden. Die Linien **230** in **Figur 2** stellen die Verbindungspfade zum Transport von Echtzeitdaten von den Knotenrechnern zu den ihnen jeweils zugeordneten *ausgewählten Verteilereinheiten* in der *zentralen Struktur von Verteilereinheiten* dar. Die Linien **241**, **242**, **243**, **244**, **245**, **246** stellen die Verbindungspfade innerhalb der zentralen Struktur dar.

Alle Knotenrechner und Verteilereinheiten haben Zugriff auf eine fehlertolerante globale Zeit bekannter Präzision.

Vor dem synchronisierten Anfang einer periodischen Kommunikationsrunde (PKR) erhalten die in der *zentralen Struktur* angeordneten *Startverteilereinheiten* **212**, **213**, **214**, **215** die dann in dieser PKR zu transportierenden Echtzeitdaten von den ihnen zugeordneten Knotenrechnern, konkret erhält die ausgewählte Verteilereinheit **212** Echtzeitdaten von dem Knotenrechnern **208** und (über die nicht *ausgewählte Verteilereinheit* **211**) Echtzeitdaten von den Knotenrechnern **201** und **202**, die *ausgewählte Verteilereinheit* **213** Echtzeitdaten von dem Knotenrechnern **203**, die *ausgewählte Verteilereinheit* **214** Echtzeitdaten von dem Knotenrechnern **204** und **205**, und die *ausgewählte Verteilereinheit* **215** Echtzeitdaten von dem Knotenrechnern **206** und **207**.

Vorzugsweise ist jede periodische Kommunikationsrunde PKR in eine Anzahl von Phasen unterteilt. In jeder Phase sendet jede *ausgewählte Verteilereinheit* entsprechend einem *a priori erstellten satisfizierenden oder optimalen Zeitplan* Echtzeitdaten mittels Echtzeitnachrichten über die verfügbaren bidirektionalen Pfade an die unmittelbar benachbarten *ausgewählten Verteilereinheiten.* Die Anzahl der Phasen, die in einer PKR erforderlich sind, damit jede Zielverteilereinheit im fehlerfreien Fall mindestens zwei Kopien jeder Echtzeitnachricht erhält, hängt von der Topologie *der zentralen Struktur der Verteilereinheiten* ab.

Vorzugsweise ist vorgesehen, dass eine Startverteilereinheit an alle anderen Verteilereinheiten in der zentralen Struktur, die entsprechend für diese Startverteilereinheit die Zielverteilereinheiten bilden, Echtzeitdaten bzw. Echtzeitnachrichten senden.

Im konkreten Beispiel der **Figur 2** beginnt am Anfang der ersten Phase einer periodische Kommunikationsrunde PKR jede der Startverteilereinheiten die vor dem Anfang der Kommunikationsrunde von den zugeordneten Knotenrechnern empfangenen Echtzeitdaten an die Zielverteilereinheiten zu senden. In **Tabelle 1 und 2**, die sich auf die Situation aus **Figur 2** beziehen, bezeichnen wir die Echtzeitdaten, die von einer Startverteilereinheit zu den Zielverteilereinheiten zu senden sind, mit E... gefolgt von der Nummer der Startverteilereinheit, VE bedeutet "Verteilereinheit". "Sendet über" gefolgt von einer Nummer nnn bezieht sich auf den Pfad nnn.

Wenn jede ausgewählte Verteilereinheit mit jeder anderen ausgewählten Verteilereinheit über Verbindungspfade wie in **Figur 2** dargestellt verbunden ist, so ist am Ende der ersten Phase in jeder Zielverteilereinheit bereits eine Kopie der Echtzeitdaten eingetroffen.

**Tab. 1: Echtzeitdatentransport in Phase 1 der PKR der Figur 2**

| **Nach VE** | **212** | **213** | **214** | **215** |
|---|---|---|---|---|
| **Von VE** | | | | |
| **212 sendetüber** | ------ | 241 | 245 | 244 |
| **Echtzeitdaten** | | E212 | E212 | E212 |
| **213 sendetüber** | 241 | ------ | 242 | 246 |
| **Echtzeitdaten** | E213 | | E213 | E213 |
| **214 sendetüber** | 245 | 242 | ------ | 243 |
| **Echtzeitdaten** | E215 | E213 | | E213 |
| **215 sendetüber** | 244 | 246 | 243 | ------ |
| **Echtzeitdaten** | E215 | E215 | E215 | |

In der zweiten Phase findet folgender Echtzeitdatentransport statt:

**Tab. 2: Echtzeitdatentransport in Phase 2 der PKR der Figur 2**

| **Nach VE** | **212** | **213** | **214** | **215** |
|---|---|---|---|---|
| **Von VE** | | | | |
| **212 sendetüber** | -**-----** | 241 | 245 | 244 |
| **Echtzeitdaten** | | E214 | E215 | E213 |
| **213 sendetüber** | 241 | -**-----** | 242 | 246 |
| **Echtzeitdaten** | E215 | | E212 | E214 |
| **214 sendetüber** | 245 | 242 | -**-----** | 243 |
| **Echtzeitdaten** | E213 | E215 | | E212 |
| **215 sendetüber** | 244 | 246 | 243 | -**-----** |
| **Echtzeitdaten** | E214 | E212 | E213 | |

Aus **Tabelle 1** und **Tabelle 2** wird ersichtlich, dass am Ende der zweiten Phase der PKR jeweils zwei Kopien der Echtzeitdaten bei jeder Zielverteilereinheit eingetroffen sind, wobei die Echtzeitdaten über unterschiedliche unabhängige Routen transportiert worden sind. Der hier vorgestellte Zeitplan ist optimal, da es unmöglich ist, in einer einzigen Phase die Nachrichten redundant von den Startverteilereinheiten zu den Zielverteilereinheiten zu senden.

Nach dem Ende einer PKR senden die Zielverteilereinheiten eine Kopie der empfangen Echtzeitdaten an die zugeordneten Knotenrechner.

Wenn in **Figur 2** die Querpfade **245** und **246** weggelassen werden, so sind mindestens drei Phasen erforderlich, um die gestellten Anforderungen zu erfüllen.

Unmittelbar nachdem die letzte Phase des zeitgesteuerten Nachrichtentransports beendet ist, kann jede Zielverteilereinheit zum a priori bestimmten *Fehlererkennungszeitpunkt* feststellen, ob im Nachrichtentransport ein Fehler aufgetreten ist, wodurch sich eine kurze Fehlererkennungslatenz realisieren lässt. Eine kurze Fehlererkennungslatenz ist bei *fail-safe* Anwendungen von besonderer Wichtigkeit.

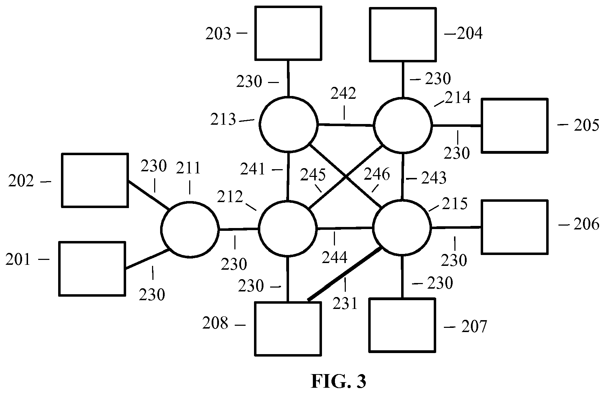

**Figur 3** zeigt eine Modifikation des Computersystems aus **Figur 2**. Gemäß **Figur 3** ist der Knotenrechner **208** über einen zusätzlichen Pfad **231** auch mit der ausgewählten Verteilereinheit **215** verbunden. Durch diese Verbindung des Knotenrechners **208** über Pfad **231** mit einer zweiten unabhängigen *ausgewählten Verteilereinheiten* gemäß **Figur 3** kann der Ausfall einer *ausgewählten Verteilereinheit* toleriert werden, was z.B. für *fail-operational* Anwendungen von Bedeutung ist.

Vorteilhaft ist es, den Transport der zeitgesteuerten Nachrichten, insbesondere der zeitgesteuerten Echtzeitnachtrichten, welche die Echtzeitdaten transportieren, während einer PKR mit dem TT Ethernet Protokoll durchzuführen. Dadurch kann beispielsweise der Zwischenraum zwischen den PRKs zum Transport von ereignisgesteuerte Ethernet Nachrichten verwenden werden.

Weiters kann vorgesehen sein, dass die Verteilereinheiten Fehler, die während einer PKR erkannt worden sind, nach Ende einer PKR an einen Monitorknotenrechner melden.

### Zitierte Literatur:

[1] US Patent 9,063,837. Bauer et al. *Method and device for fault-tolerant, time-controlled real-time communication.* granted June 23, 2015.
[2] US Patent 7,848,361. Ungermann et al. *Time-triggered communication system and method for the synchronization of a dual-channel network.* granted December 7, 2010.
[3] US Patent 7,548,551 *System and method of optimizing the bandwidth of a time triggered communication protocol with homogeneous slot sizes.* granted June 16, 2009
[4] SAE Standard AS6802 von TT Ethernet. URL: http://standards.sae.org/as6802
[5] Kopetz, H.. Real-time Systems-Design Principles for Distributed Embedded Applications. Springer Verlag, 2011.
[6] Kopetz, H. Pulsed Data Streams. In: From Model Driven Design to Resource Management for Distributed Embedded Systems. Ed.: B. Kleinjohann et al. IFIP Series Vol. 225. Pp. 105-114. Springer Verlag. 2006.

## Patentansprüche

1. Verfahren zum periodischen Transport von Echtzeitdaten in einem Computersystem, welches Computersystem Knotenrechner (201-208), und Verteilereinheiten (211-215) umfasst, wobei die Knotenrechner (**201 - 208**) und die Verteilereinheiten (**211 - 215**) Zugriff auf eine globale Zeit haben, und wobei Echtzeitdaten mittels zeitgesteuerter Echtzeitnachrichten transportiert werden,
**dadurch gekennzeichnet, dass**
*ausgewählte Verteilereinheiten* (**212**, **213**, **214**, **215**) *eine zentrale Struktur* von Verteilereinheiten bilden, und wobei
während einer *periodischen Kommunikationsrunde*, PKR, im fehlerfreien Fall mindestens zwei Kopien jeder zu sendenden Echtzeitnachricht über mindestens *zwei unabhängige Routen durch die zentrale Struktur* durch Ausführung eines *satisfizierenden* oder eines *optimalen* Zeitplans von einer *Startverteilereinheit* in der zentralen Struktur zu einer *Zielverteilereinheit* in der zentralen Struktur transportiert werden, wobei ein Zeitplan *optimal* ist, wenn es keinen Zeitplan gibt, der den Nachrichtenaustausch unter gegebenen Randbedingungen in einer kürzerer Zeit realisiert als dieser Zeitplan, und wobei ein Zeitplan *satisfizierend* ist, wenn der Nachrichtenaustausch unter den gegebenen Randbedingungen zufriedenstellend erfolgt, ohne dass dieser Zeitplan aber optimal ist,
und wobei der Zeitplan einen *Fehlererkennungszeitpunkt* enthält, zu welchem eine Zielverteilereinheit feststellen kann, ob in dem Nachrichtentransport ein Fehler aufgetreten ist, sodass
im Fehlerfall unmittelbar nach dem in dem Zeitplan enthaltenen *Fehlererkennungszeitpunkt* mit einer Fehlerbehandlung begonnen werden kann.

2. Verfahren nach Anspruch 1, **dadurch gekennzeichnet, dass** nach Ende einer *periodischen Kommunikationsrunde* jene Verteilereinheiten, die an dieser *periodischen Kommunikationsrunde* teilgenommen haben, eine Kopie der während dieser *periodischen Kommunikationsrunde* empfangenen Echtzeit-Nachrichten an die der jeweiligen Verteilereinheit zugehörigen Knotenrechner senden.

3. Verfahren nach Anspruch 1 oder 2, **dadurch gekennzeichnet, dass** nach Ende einer *periodischen Kommunikationsrunde* die Verteilereinheiten Fehler, die während der *periodischen Kommunikationsrunde* erkannt worden sind, an einen Monitorknotenrechner melden.

4. Verfahren nach einem der Ansprüche 1 bis 3, **dadurch gekennzeichnet, dass** der Transport von Nachrichten in der zentralen Struktur von Verteilereinheiten mit dem TTEthernet Protokoll durchgeführt wird.

5. Verfahren nach einem der Ansprüche 1 bis 4, **dadurch gekennzeichnet, dass** eine Startverteilereinheit die Echtzeitdaten in einer PKR an jede Verteilereinheit in der zentralen Struktur überträgt.

6. Verfahren nach einem der Ansprüche 1 bis 5, **dadurch gekennzeichnet, dass** alle Verteilereinheiten in der zentralen Struktur als Startverteilereinheit fungieren, welche in einer PKR Echtzeitnachrichten an Zielverteilereinheiten übertragen.

7. Computersystem, welches Computersystem Knotenrechner (201-208) und Verteilereinheiten (211-215) umfasst, wobei die Knotenrechner (**201 - 208**) und die Verteilereinheiten (**211 - 215**) Zugriff auf eine globale Zeit haben, und wobei Echtzeitdaten mittels zeitgesteuerter Echtzeitnachrichten transportiert werden,
**dadurch gekennzeichnet, dass**
*ausgewählte Verteilereinheiten* (**212**, **213**, **214**, **215**) *eine zentrale Struktur* von Verteilereinheiten bilden, und wobei
während einer *periodischen Kommunikationsrunde*, PKR, im fehlerfreien Fall mindestens zwei Kopien jeder zu sendenden Echtzeitnachricht über mindestens *zwei unabhängige Routen durch die zentrale Struktur* durch Ausführung eines *satisfizierenden* oder *optimalen* Zeitplans von einer *Startverteilereinheit* in der zentralen Struktur zu einer *Zielverteilereinheit* in der zentralen Struktur transportiert werden, wobei ein Zeitplan *optimal* ist, wenn es keinen Zeitplan gibt, der den Nachrichtenaustausch unter gegebenen Randbedingungen in einer kürzerer Zeit realisiert als dieser Zeitplan, und wobei ein Zeitplan *satisfizierend* ist, wenn der Nachrichtenaustausch unter den gegebenen Randbedingungen zufriedenstellend erfolgt, ohne dass dieser Zeitplan aber optimal ist,
und wobei der Zeitplan einen *Fehlererkennungszeitpunkt* enthält, zu welchem eine Zielverteilereinheit feststellen kann, ob in dem Nachrichtentransport ein Fehler aufgetreten ist, sodass
im Fehlerfall unmittelbar nach dem in dem Zeitplan, vorzugsweise in dem optimalen Zeitplan, enthaltenen *Fehlererkennungszeitpunkt* mit einer Fehlerbehandlung begonnen werden kann.

8. Computersystem nach Anspruch 7, **dadurch gekennzeichnet, dass** nach Ende einer *periodischen Kommunikationsrunde* jene Verteilereinheiten, die an dieser *periodischen Kommunikationsrunde* teilgenommen haben, eine Kopie der während dieser *periodischen Kommunikationsrunde* empfangenen Echtzeit-Nachrichten an die der jeweiligen Verteilereinheit zugehörigen Knotenrechner senden.

9. Computersystem nach Anspruch 7 oder 8, **dadurch gekennzeichnet, dass** nach Ende einer *periodischen Kommunikationsrunde* die Verteilereinheiten Fehler, die während der *periodischen Kommunikationsrunde* erkannt worden sind, an einen Monitorknotenrechner melden.

10. Computersystem nach einem der Ansprüche 7 bis 9, **dadurch gekennzeichnet, dass** der Transport von Nachrichten in der zentralen Struktur von Verteilereinheiten mit dem TTEthernet Protokoll durchgeführt wird.

11. Computersystem nach einem der Ansprüche 7 bis 10, **dadurch gekennzeichnet, dass** eine Startverteilereinheit die Echtzeitdaten in einer PKR an jede Verteilereinheit in der zentralen Struktur überträgt.

12. Computersystem nach einem der Ansprüche 7 bis 11, **dadurch gekennzeichnet, dass** alle Verteilereinheiten in der zentralen Struktur eine Startverteilereinheit fungieren, welche in einer PKR Echtzeitnachrichten an Zielverteilereinheiten übertragen.

13. Computersystem nach einem der Ansprüche 7 bis 12, **dadurch gekennzeichnet, dass** ein Knotenrechner (**208**) mit zwei oder mehr *ausgewählten Verteilereinheiten* (**212**, **215**) der zentralen Struktur von Verteilereinheiten verbunden ist.

## Claims

1. A method for the periodic transport of real time data in a computer system, the computer system comprising node computers (201-208) and distributor units (211-215), the node computers (201-208) and the distributor units (211-215) having access to a global time, and real time data being transported by means of time-triggered real time messages,
**characterized in that**
selected distributor units (212, 213, 214, 215) form a central structure of distributor units; and
during a periodic communication round, PCR, in a fault-free case, at least two copies of each of the real time messages to be sent are transported via at least two independent routes by way of the central structure, by executing a satisfying or an optimal time plan, from a starting distributor unit in the central structure to a target distributor unit in the central structure, a time plan being optimal if there is no time plan that implements the message exchange under the given framework conditions in a shorter time than this time plan, and a time plan being satisfying if the message exchange takes place satisfactorily under the given framework conditions, however without this time plan being optimal,
and the time plan including a fault detection point in time at which a target distributor unit is able to establish whether a fault has occurred in the message transport so that
in the event of a fault, fault handling can begin immediately after the fault detection point in time that is included in the time plan.

2. The method according to claim 1, **characterized in that**, after the end of a periodic communication round, those distributor units that participated in this periodic communication round send a copy of the real time messages that were received during this periodic communication round to the node computers associated with the respective distributor unit.

3. The method according to claim 1 or 2, **characterized in that**, after the end of a periodic communication round, the distributor units report faults that were detected during the periodic communication round to a monitoring node computer.

4. The method according to any one of claims 1 to 3, **characterized in that** the transport of messages in the central structure of distributor units is carried out using the TTEthernet protocol.

5. The method according to any one of claims 1 to 5, **characterized in that** a starting distributor unit transmits the real time data in a PCR to each distributor unit in the central structure.

6. The method according to any one of claims 1 to 5, **characterized in that** all distributor units in the central structure function as starting distributor units, which in a PCR transmit real time messages to target distributor units.

7. A computer system, the computer system comprising node computers (201-208) and distributor units (211-215), the node computers (201-208) and the distributor units (211-215) having access to a global time, and real time data being transported by means of time-triggered real time messages,
**characterized in that**
selected distributor units (212, 213, 214, 215) form a central structure of distributor units; and
during a periodic communication round, PCR, in a fault-free case, at least two copies of each of the real time messages to be sent are transported via at least two independent routes by way of the central structure, by executing a satisfying or an optimal time plan, from a starting distributor unit in the central structure to a target distributor unit in the central structure, a time plan being optimal if there is no time plan that implements the message exchange under the given framework conditions in a shorter time than this time plan, and a time plan being satisfying if the message exchange takes place satisfactorily under the given framework conditions, however without this time plan being optimal,
and the time plan including a fault detection point in time at which a target distributor unit is able to establish whether a fault has occurred in the message transport so that
in the event of a fault, fault handling can begin immediately after the fault detection point in time that is included in the time plan, and preferably in the optimal time plan.

8. The computer system according to claim 7, **characterized in that**, after the end of a periodic communication round, those distributor units that participated in this periodic communication round send a copy of the real time messages that were received during this periodic communication round to the node computers associated with the respective distributor unit.

9. The computer system according to claim 7 or 8, **characterized in that**, after the end of a periodic communication round, the distributor units report faults that were detected during the periodic communication round to a monitoring node computer.

10. The computer system according to any one of claims 7 to 9, **characterized in that** the transport of messages in the central structure of distributor units is carried out using the TTEthernet protocol.

11. The computer system according to any one of claims 7 to 10, **characterized in that** a starting distributor unit transmits the real time data in a PCR to each distributor unit in the central structure.

12. The computer system according to any one of claims 7 to 11, **characterized in that** all distributor units in the central structure function as starting distributor units, which in a PCR transmit real time messages to target distributor units.

13. The computer system according to any one of claims 7 to 12 , **characterized in that** a node computer (208) is connected to two or more selected distributor units (212, 215) of the central structure of distributor units.

## Revendications

1. Procédé pour le transport périodique de données en temps réel dans un système informatique, lequel système informatique comporte des calculateurs nodaux (201 - 208) et des unités distributrices (211 - 215), les calculateurs nodaux (201 - 208) et les unités distributrices (211 - 215) ayant accès à un temps global, et des données en temps réel étant transportées au moyen de messages en temps réel temporisés,
**caractérisé par le fait que**
*des unités distributrices choisies* (212, 213, 214, 215) forment *une structure centrale* d'unités distributrices, et dans lequel
durant une *session de communication périodique,* PKR, dans le cas exempt d'erreurs au moins deux copies de chaque message en temps réel à envoyer sont transportées par au moins *deux routes indépendantes à travers la structure centrale* par l'exécution d'un calendrier *satisfaisant* ou d'un calendrier optimal d'une *unité distributrice de départ* dans la structure centrale à une *unité distributrice cible* dans la structure centrale, un calendrier étant *optimal* lorsqu'il n'y a pas de calendrier qui réalise l'échange de messages sous des contraintes données dans un temps plus court que ce calendrier, et un calendrier étant *satisfaisant* lorsque l'échange de messages a lieu de façon satisfaisante sous les contraintes données sans que ce calendrier ne soit cependant optimal,
et dans lequel le calendrier contient un *moment de détection d'erreur* auquel une unité distributrice cible peut déterminer si une erreur est survenue dans le transport de messages, de telle sorte qu'en cas d'erreur un traitement d'erreur peut commencer immédiatement après le *moment de détection d'erreur* contenu dans le calendrier.

2. Procédé selon la revendication 1, **caractérisé par le fait qu'à** la fin d'une *session de communication périodique,* les unités distributrices, qui ont participé à cette *session de communication périodique,* envoient une copie des messages en temps réel reçus durant cette *session de communication périodique* aux calculateurs nodaux associés à l'unité distributrice respective.

3. Procédé selon l'une des revendications 1 ou 2, **caractérisé par le fait qu'**à la fin d'une *session de communication périodique,* les unités distributrices notifient des erreurs qui ont été détectées durant la *session de communication périodique* à un calculateur nodal moniteur.

4. Procédé selon l'une des revendications 1 à 3, **caractérisé par le fait que** le transport de messages dans la structure centrale d'unités distributrices est réalisé avec le protocole TTEthernet.

5. Procédé selon l'une des revendications 1 à 4, **caractérisé par le fait qu'**une unité distributrice de départ transmet les données en temps réel dans une PKR à chaque unité distributrice dans la structure centrale.

6. Procédé selon l'une des revendications 1 à 5, **caractérisé par le fait que** toutes les unités distributrices dans la structure centrale fonctionnent en tant qu'unité distributrice de départ, lesquelles dans une PKR transmettent des messages en temps réel à des unités distributrices cibles.

7. Système informatique, lequel système informatique comporte des calculateurs nodaux (201 - 208) et des unités distributrices (211 - 215), les calculateurs nodaux (201 - 208) et les unités distributrices (211 - 215) ayant accès à un temps global, et des données en temps réel étant transportées au moyen de messages en temps réel temporisés,
**caractérisé par le fait que**
*des unités distributrices choisies* (211, 213, 214, 215) forment *une structure centrale* d'unités distributrices, et dans lequel
durant une *session de communication périodique,* PKR, dans le cas exempt d'erreurs au moins deux copies de chaque message en temps réel à envoyer sont transportées par au moins *deux routes indépendantes à travers la structure centrale* par l'exécution d'un calendrier *satisfaisant* ou *optimal* d'une *unité distributrice de départ* dans la structure centrale à une *unité distributrice cible* dans la structure centrale, un calendrier étant *optimal* lorsqu'il n'y a pas de calendrier qui réalise l'échange de messages sous des contraintes données dans un temps plus court que ce calendrier temporel et un calendrier étant *satisfaisant* lorsque l'échange de messages se produit de façon satisfaisante sous les contraintes données sans que ce calendrier ne soit cependant optimal,
et dans lequel le calendrier contient un *moment de détection d'erreur* auquel une unité distributrice cible peut déterminer si une erreur est survenue dans le transport de messages, de telle sorte qu'en cas d'erreur un traitement d'erreur peut commencer immédiatement après le *moment de détection d'erreur* contenu dans le calendrier, de préférence dans le calendrier optimal.

8. Système informatique selon la revendication 7, **caractérisé par le fait qu'**à la fin d'une *session de communication périodique,* les unités distributrices qui ont participé à cette *session de communication périodique,* envoient une copie des messages en temps réel reçus durant cette *session de communication périodique* aux calculateurs nodaux associés à l'unité distributrice respective.

9. Système informatique selon l'une des revendications 7 ou 8, **caractérisé par le fait qu'**à la fin d'une *session de communication périodique,* les unités distributrices notifient des erreurs qui ont été détectées durant la *session de communication périodique* à un calculateur nodal moniteur.

10. Système informatique selon l'une des revendications 7 à 9, **caractérisé par le fait que** le transport de messages dans la structure centrale d'unités distributrices est réalisé avec le protocole TTEthernet.

11. Système informatique selon l'une des revendications 7 à 10, **caractérisé par le fait qu'**une unité distributrice de départ transmet les données en temps réel dans une PKR à chaque unité distributrice dans la structure centrale.

12. Système informatique selon l'une des revendications 7 à 11, **caractérisé par le fait que** toutes les unités distributrices dans la structure centrale fonctionnent en tant qu'unité distributrice de départ, lesquelles dans une PKR transmettent des messages en temps réel à des unités distributrices cibles.

13. Système informatique selon l'une des revendications 7 à 12, **caractérisé par le fait qu'**un calculateur nodal (208) est relié à au moins deux *unités distributrices choisies* (212, 215) de la structure centrale d'unités distributrices.
